# EUROPEAN PATENT SPECIFICATION

(11) **EP 1 752 598 B1**
(45) Date of publication and mention of the grant of the patent: **15.10.2008**
(21) Application number: 05425587.2
(22) Date of filing: 09.08.2005
(51) Int. Cl.: E04F 15/20, E04F 15/22

(54) **A laminated covering material**
Mehrschichtiger Belagsmaterial
Matériau de revêtement multicouche

(43) Date of publication of application: 14.02.2007
(73) Proprietor: Mondo S.p.A., 12051 Alba Frazione Gallo (CN) (IT)
(72) Inventor: Stroppiana, Fernando, 12060 Grinzane Cavour (Cuneo) (IT)
(74) Representative: Bosotti, Luciano

(56) References cited:
- EP-A- 0 794 302
- EP-A- 0 849 413
- WO-A-20/04009358
- DE-A1- 2 409 832
- DE-U1- 20 111 692
- FR-A- 1 466 557

## Description

### Field of the invention

The invention relates to laminar covering materials that can be used, for example, for providing floorings such as floorings for civil applications, and in particular for "industrial" applications. The term "industrial" is here meant, in general, to refer to floorings that are exposed to conditions in which there is a lot of coming-and-going of people or that are subject to extensive wear (for example, airports, railway or bus stations, underground stations, commercial centres, etc.). In particular, the invention relates to a laminar covering material that can be made with a resilient material, such as a material for "resilient floorings".

### Description of the known art

The term "resilient flooring" or "resilient floor covering" is intended to indicate the types of resilient flooring identified according to the CEN/TC134 Committee operating in the framework of the European Standards Committee, and in particular the types of flooring identified in the EN650 standard. It refers therefore, according to the current acceptation of the term, to resilient floorings made with materials comprising, for example, natural, synthetic, and artificial rubbers, artificial and synthetic resins (for example, polyolefin-based materials, PVC-based materials, and the like), as well as materials having a particular composition, such as for instance linoleum.

The known art regarding floor-covering materials of this type is extremely extensive, as certified, for example, by the documents Nos. US-A-4 772 500, US-A-5 217 554, US-A-5 899 038, US-A-2003/006522, US-B-6 391 381, US-B-6 418 691, US-B-6 809 144, US-A-2005/006809 and US-A-2005/065236, all assigned in ownership to the assignee of the present patent application.

In the production of covering materials (and in particular materials for floorings) of the type described herein, it is necessary to take into account requirements of various nature, which, in effect, frequently contrast with one another.

One of the most deeply felt requirements is that of providing covering materials that are able to combine an attractive aesthetic appearance with qualities of high resistance to wear, low deformation even under heavy loads, dimensional stability (in particular, conservation of the characteristics of planarity over time), absence of phenomena of detachment from the laying substrate, together with characteristics of tread that are completely satisfactory (good anti-slip performance, low noise).

The impossibility of satisfying all these requirements in an ideal way means that, at least for some applications, the choice of the users is oriented towards covering materials of a different type (in general, of a more traditional type) such as, for example, ceramic, marble and/or stone coverings and floorings, said covering materials in turn not, however, being without some major drawbacks, such as, for example, the weight (which renders far from readily proposable, for example, the use of said materials on board vehicles), the risk of failure and of cracking in the presence of possible deformations or vibrations of the laying substrates (which, once again, renders problematical the use of floorings of this kind on board mobile structures or also within civil structures in areas exposed to the risk of earthquake).

More specifically, the invention relates to a laminar covering material according to the preamble of claim 1, which is known e.g. from EP-A-0 794 302.

### Purpose and summary of the invention

The object of the present invention is to provide a covering that is able to solve in an ideal way the problems linked both to the use of resilient materials and to the use of the alternative materials considered previously, the aim being to provide a covering material that is able to combine the characteristics of high aesthetic quality and of resistance to the stresses due to tread of some traditional materials with the qualities of performance (in particular, treading "comfort") and of low weight traditionally recognized to coverings with a base of resilient materials.

According to the present invention, the object above is achieved thanks to a covering material having the characteristics referred to specifically in the ensuing claims.

Essentially, the solution described herein is based upon recourse to a combination between a metal reticular structure and a resilient material. This combination is not in itself new to the art; it is extensively used, for instance, in the production of conveyor belts, and in the automotive industry for making tyres and components such as sleeves, anti-vibrating elements and the like, in which an elastomer is combined with a structure of metal reinforcement, typically having a reticular structure.

The above "technological" solutions usually contemplate, however, that the metal reinforcement structure is kept in a hidden ("embedded") position with respect to the mass of elastomer material, seeking rather to contain as far as possible any risks of exposure of the metal structure with respect to the metal/elastomer composite material.

The solution described herein moves, instead, in the exactly opposite direction and is based upon the recognition of the fact that - in an altogether surprising and unexpected way - the, at leasts partial, exposure of the reinforcement metal structure on the outer surface of the covering bestows upon the covering material excellent characteristics of resistance to wear, low deformation even under heavy loads, dimensional stability (in particular, conservation of characteristics of planarity over time), absence of phenomena of detachment from the laying substrate, together with altogether satisfactory characteristics of tread (good anti-slip performance, low noise).

Added to the above is an appreciable high aesthetic quality without this having any adverse effect on the intrinsic qualities demonstrated by coverings with a base of resilient material. This regards in a particular, but not exclusive, way the possibility of altogether limiting undesirable phenomena of detachment between the metal reinforcement structure and the resilient material.

### Brief description of the annexed drawings

The invention will now be described, purely by way of non-limiting example, with reference to the annexed plate of drawings, in which:
- Figures 1 to 3 illustrate successive steps of a method for the construction of a covering material of the type described herein; and
- Figure 4 illustrates schematically, in a partially cut-away view, the characteristics of the material described herein.

### Detailed description of examples of embodiment of the invention

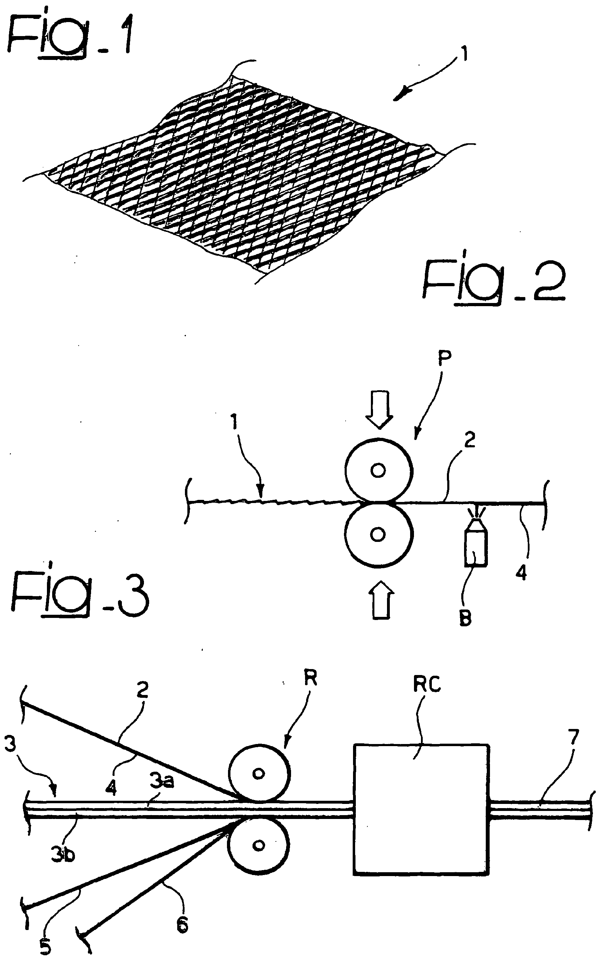

Figure 1 of the annexed plate of drawings illustrates, as representing one of the initial steps of the method described herein, the step of providing a structure made of a metal material represented typically by a network, lattice or grid 1 of metal material,

A currently preferred material is represented by aluminium. The values of mass per unit area of the network, fabric or lattice-like structure range preferably between 250 and 1250 g/m² approximately, a particularly preferred value being around 750 g/m².

The expressions "approximately" and "around", as used herein, are evidently intended to take into account the tolerances normally associated to the construction and to the measurement of the quantities each time considered.

The conformation of the meshes of the network or lattice does not in itself constitute a binding parameter. The choice currently preferred is that of networks with a flattened rhomboidal mesh (i.e., with each mesh having the shape of a rhombus) or a flattened hexagonal mesh.

Reticular metal structures of this type are commonly available in the art for various applications. A field in which extensive use of networks (grids or lattices) of this type is made is the automotive sector, where these networks are used, for example, to make protective grills for filters, ventilation intakes and openings or ducts of various nature. Networks or lattices of this type are widely used also in the building sector.

The dimensions of the meshes of these structures are usually identified by two values (DL and DC), which correspond to the values of the maximum and minimum "diagonals" of the mesh. For the purposes of the solution described herein values of major diagonal DL approximately between 5 mm and 25 mm are considered preferable, the preferred range being between 10 mm and 15 mm approximately, a particularly preferred value being around 10 mm. Likewise values of minor diagonal DC of between 3 mm and 13 mm approximately are considered preferable, the preferred range being between 5 mm and 6.5 mm approximately, a particularly preferred value being around 5 mm. In a preferred way, the aforesaid ranges/values are to be considered coordinated with one another.

It will likewise be appreciated that the term "reticular structure" is herein used in its widest acceptation, and thus comprises within its scope also structures consisting of parallel filiform elements or else structures consisting of filiform elements that evolve according to volutes of various nature.

In the most typical form, which is that of a network consisting of regular meshes, these structures are usually obtained starting from a strip of sheet metal that is simultaneously undulated and notched so as to form a regular array (for example, a quincunx) of transverse slits and then stretched out so as to create the network structure.

In the majority of applications, this method means that the reticular structure obtained is not present exactly plane but is constituted by branches that extend, at least in part, in a direction at least marginally angled with respect to the general plane of extension of the reticular structure.

Figure 2 illustrates a step of treatment, in which a reticular material 1 such as the one represented in Figure 1 is subjected to an operation of flattening performed in an opposed-roller apparatus basically resembling a calender P. The aim of this flattening treatment is to arrive at a reticular structure 2 flattened having an overall plane development and a thickness in the region of 0.3 - 2 mm, approximately.

The plane reticular structure 2 thus obtained is then coupled, in the step schematically represented in Figure 3, to one or more layers 3 of material for resilient floorings or resilient floor coverings, according to the specific acceptation of this term recalled in the introductory part of the present description.

Before proceeding to said coupling operation, the metal reticular structure 2 subjected to flattening is treated, at least on the side that is to be coupled to the resilient material 3, with a so-called "primer", i.e., with a material functioning as promoter of adhesion between the metal material of the structure 2 and the resilient material 3 to which said structure is to be coupled.

Promoters of adhesion that can be used in an altogether satisfactory way in the context described herein are available under the commercial name of CILBOND^{®} produced by Chemical Innovations Limited of Bamber Bridge, England. Assuming, for example, that the metal material of the structure 2 is aluminium, and the resilient material 3 consists of rubber (either natural or synthetic, such as for example SBR) the aforesaid promoter of adhesion or primer, designated schematically by 4, may be the product CILBOND^{®} 24.

After application of the primer 4 (performed in a station designated by B, operating according to known techniques), the metal structure 2 and the resilient material 3 are coupled to one another according to one of the typical methods used for the production of laminar covering materials with a base of resilient materials.

For example, the resilient material 3 may be of a stratified type and comprise two or more layers 3a, 3b, for instance of a rubber-based mix with different formulation, for example for optimizing the ratio of connection/adhesion with the adjacent layers.

The method of coupling in question can be performed by resorting to known technologies that envisage the simultaneous application of pressure and heat to the composite material constituted, in the specific case considered herein (see Figure 3), by the metal reticular structure 2 and by the resilient material 3.

In the case in point, in Figure 3 the reference R designates a pair of counter-rotating rollers that couples the various.layers of the composite material, whilst the reference RC designates as a whole a machine for the simultaneous application of pressure and heat to the composite material in question. The equipment in question can be typically constituted by a continuous press or an isostatic press, both of a known type.

The construction of the composite material described herein involves the application, on the side of the layer of the resilient material 3 opposite to the plane metal structure 2, of one or more stabilization layers.

The stabilization layer consists of a network 5 made of glass fibre (with mass per unit area, for example, of from 25 to 100 g/m² approximately, with a preferred value of around 50 g/m²), the function of which, in the context of the composite product obtained, is to create a balanced metal/resistant-material/reinforcement-fabric structure that can minimize undesirable phenomena of deformation of the structure thus obtained.

Combined with the network 5, on the outer side with respect to the composite material, there may be a further layer of material 6, such as for example a geotextile material and/or a material in the form of felt (with mass per unit area, for instance, of 80 to 300 g/m² approximately, with a preferred value of around 200 g/m²). A felt of this type, made for example with a base of polyester and/or polypropylene, is able to facilitate application of glues for laying of the flooring and the firm connection of the covering material thus obtained (designated as a whole by 7) on an application substrate.

As already mentioned in the introductory part of the present description, the material 7 takes the form of a composite metal material/resilient material in which the reinforcement metal structure, instead of being embedded within the composite material, is completely exposed or else at least marginally emerging from the outer surface of the composite material 7, i.e., the surface exposed to severe treatment during use: in the case of a flooring, said outer surface is evidently constituted by the upper surface of the flooring, which is exposed to tread.

The degree of exposure/surfacing of the metal structure 2 with respect to the aforesaid outer surface can be conveniently adjusted - all other process parameters being equal - by adjusting the pressure applied to the composite material during its formation in the equipment designated by RC in Figure 3.

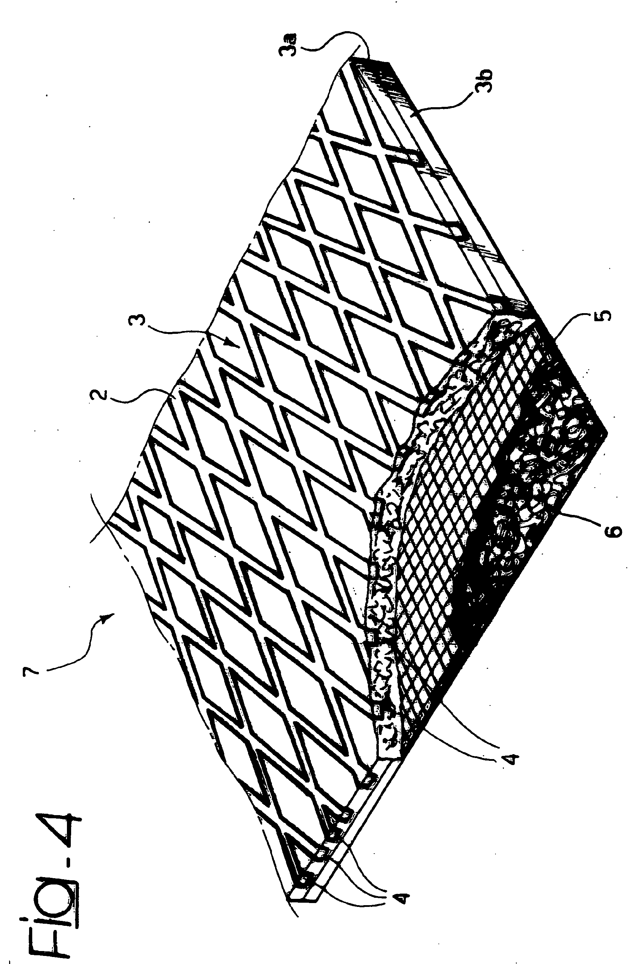

The material 7 obtained with the method just described is configured then as schematically represented in Figure 4, i.e., as a material in which the "body" layer consists of a resilient material 3 (such as rubber, possibly with stratified structure 3a, 3b) and the outer surface of which, exposed to tread and to wear, is reinforced by the pattern of the metal structure 2 that surfaces in a complete or at least partial way on the aforesaid outer surface, whilst the primer 4 ensures intimate connection between the metal structure 2 and the resilient material 3, totally preventing the undesirable creation of areas of (micro)detachment between the metal structure 2 and the resilient material 3.

Albeit without wishing: to be tied down' to any specific theory in this connection, the present applicant has reasons to believe that the (complete or partial) surfacing of the metal structure 2 on the outer surface of the composite material thus obtained means that the metal structure 2 amply absorbs the stresses that, in a resilient flooring of a traditional type, tend to be discharged on the resilient material. From this fact there derive the characteristics of resistance to wear demonstrated by a covering material of the type described above.

At the same time, the material in question presents good characteristics of compliance, i.e., of resilience. This also in view of the fact that the metal structure 2 is not completely rigid and has, instead, above all in the case where it is made with a material such as aluminium, good characteristics of deformability and of resistance to vibration and to the stresses possibly linked to a deformation of the laying substrate.

The material may be made in a laminar form with small thicknesses (for example, with thicknesses typically of between 1.8 mm and 4 mm, typical of coverings made of resilient material) with a containment of the weight per unit surface to values considerably smaller than the homologous values of materials, such as ceramic or stone materials. It will, on the other hand, be appreciated that the solution described herein is suited also to the creation of the laminar material 7 with larger thicknesses (thicknesses of around one centimetre), with the possibility of making the material available in the form of tiles.

Added to these considerations of a technical nature are also considerations of an aesthetic nature: the emerging metal structure 2 is able to contribute, with its colouring (and its typical metallic appearance), to the high aesthetic quality of the flooring, it being also possible, for the purposes of the overall colouring of the covering, to play on the range of chromatic choices - which are practically infinite - allowed for the resilient material.

Of course, without prejudice to the principle of the invention, the details of construction and the embodiments may widely vary with respect to what is described and illustrated herein, without thereby departing from the scope of the present invention, as defined by the annexed claims.

## Claims

1. A laminar flooring material comprising:
- a layer (3) of resilient material; and
- a plane metal reticular structure (2) coupled to said layer of resilient material (3); said metal reticular structure (2) at least partially emerging at the upper surface exposed to thread of said layer of resilient material (3),
wherein said plane metal reticular structure (2) is made of deformable metal material, and **characterized in that** the material comprises, on the side of said layer (3) of resilient material (3) opposite to said plane metal reticular structure (2), a balancing layer (5) in the form of a network, wherein said balancing layer (5) consists of fibres, such as glass fibres.

2. The material according to Claim 1, **characterized in that** said metal reticular structure (2) emerges completely at the surface of said layer of resilient material (3).

3. The material according to Claim 1 or Claim 2, **characterized in that** it comprises a promoter of adhesion or primer (4) set between said plane metal reticular structure (2) and said layer of resilient material (3).

4. The material according to any one of the preceding claims, **characterized in that** said metal reticular structure (2) is a completely plane structure.

5. The material according to any one of the preceding claims, **characterized in that** said plane metal reticular structure (2) is made of aluminium.

6. The material according to any one of the preceding claims, **characterized in that** said plane metal reticular structure (2) has a mass per unit area of between 250 and 1250 g/m², approximately.

7. The material according to any one of the preceding claims, **characterized in that** said plane metal reticular structure (2) has a mass per unit area of around 750 g/m².

8. The material according to any one of the preceding claims, **characterized in that** said plane metal reticular structure (2) has meshes with a flattened rhomboidal or hexagonal shape.

9. The material according to any one of the preceding claims, **characterized in that** said plane metal reticular structure (2) has meshes with values of major diagonal (DL) of between 5 and 25 mm, approximately.

10. The material according to any one of the preceding claims, **characterized in that** said plane metal reticular structure (2) has meshes with values of major diagonal (DL) of between 10 and 15 mm, approximately.

11. The material according to any one of the preceding claims, **characterized in that** said plane metal reticular structure (2) has meshes with values of major diagonal (DL) of around 10 mm.

12. The material according to any one of the preceding claims, **characterized in that** said plane metal reticular structure (2) has meshes with values of minor diagonal (DC) of between 3 and 13 mm, approximately.

13. The material according to any one of the preceding claims, **characterized in that** said plane metal reticular structure (2) has meshes with values of minor diagonal (DC) of between 5 and 6.5 mm, approximately.

14. The material according to any one of the preceding claims, **characterized in that** said plane metal reticular structure (2) has meshes with values of minor diagonal (DC) of around 5 mm.

15. The material according to any one of the preceding claims, **characterized in that** said resilient material (3) is chosen in the group consisting of rubbers, artificial and synthetic resins, and linoleum.

16. The material according to Claim 15, **characterized in that** said resilient material (3) is a rubber-based material.

17. The material according to Claim 1, **characterized in that** said balancing layer (5) has associated to it an outer layer of geotextile material and/or a material in the form of felt (6).

## Patentansprüche

1. Flächiges Belagsmaterial umfassend:
- eine Schicht (3) aus einem elastischen Material; und
- eine ebene metallische netzförmige Struktur (2), welche an die Schicht aus elastischem Material (3) gekoppelt ist, wobei die metallische netzförmige Struktur (2) zumindest teilweise an der oberen Oberfläche hervortritt, welche dem Einfädeln der Schicht von nachgiebigem Material (3) ausgesetzt ist, wobei die ebene metallische netzförmige Struktur (2) aus einem deformierbaren metallischen Material hergestellt ist, und **dadurch gekennzeichnet, dass** das Material auf der Seite der Schicht (3) aus elastischem Material (3) gegenüber der ebenen metallischen netzförmigen Struktur (2) eine ausgleichende Schicht (5) in Form eines Netzes umfasst, wobei die ausgleichende Schicht (5) aus Fasern, wie Glasfasern, besteht.

2. Material nach Anspruch 1, **dadurch gekennzeichnet, dass** die metallische netzförmige Struktur (2) vollständig an der Oberfläche der Schicht aus elastischem Material (3) hervortritt.

3. Material nach Anspruch 1 oder 2, **dadurch gekennzeichnet, dass** es einen Haftvermittler oder ein Haftmittel (4) umfasst, welches zwischen der ebenen metallischen netzförmigen Struktur (2) und der Schicht aus elastischem Material (3) angeordnet ist.

4. Material nach irgendeinem der vorherigen Ansprüche, **dadurch gekennzeichnet, dass** die ebene metallische netzförmige Struktur (2) eine vollständig ebene Struktur ist.

5. Material nach irgendeinem der vorherigen Ansprüche, **dadurch gekennzeichnet, dass** die ebene metallische netzförmige Struktur (2) aus Aluminium hergestellt ist.

6. Material nach irgendeinem der vorherigen Ansprüche, **dadurch gekennzeichnet, dass** die ebene metallische netzförmige Struktur (2) eine Masse pro Flächeneinheit von zwischen ungefähr 250 und 1250 g/m² aufweist.

7. Material nach irgendeinem der vorherigen Ansprüche, **dadurch gekennzeichnet, dass** die ebene metallische netzförmige Struktur (2) eine Masse pro Flächeneinheit von ungefähr 750 g/m² aufweist.

8. Material nach irgendeinem der vorherigen Ansprüche, **dadurch gekennzeichnet, dass** die ebene metallische netzförmige Struktur (2) Maschen mit einer abgeflachten rhombischen oder sechseckigen Form aufweist.

9. Material nach irgendeinem der vorherigen Ansprüche, **dadurch gekennzeichnet, dass** die ebene metallische netzförmige Struktur (2) Maschen mit Werten der Hauptdiagonale (DL) zwischen ungefähr 5 und 25 mm aufweist.

10. Material nach irgendeinem der vorherigen Ansprüche, **dadurch gekennzeichnet, dass** die ebene metallische netzförmige Struktur (2) Maschen mit Werten der Hauptdiagonale (DL) von zwischen ungefähr 10 und 15 mm aufweist.

11. Material nach irgendeinem der vorherigen Ansprüche, **dadurch gekennzeichnet, dass** die ebene metallische netzförmige Struktur (2) Maschen mit Werten der Hauptdiagonale (DL) von ungefähr 10 mm aufweist.

12. Material nach irgendeinem der vorherigen Ansprüche, **dadurch gekennzeichnet, dass** die ebene metallische netzförmige Struktur (2) Maschen mit Werten einer Nebendiagonale (DC) von zwischen ungefähr 3 und 13 mm aufweist.

13. Material nach irgendeinem der vorherigen Ansprüche, **dadurch gekennzeichnet, dass** die ebene metallische netzförmige Struktur (2) Maschen mit Werten der Nebendiagonale (DC) von zwischen ungefähr 5 und 6,5 mm aufweist.

14. Material nach irgendeinem der vorherigen Ansprüche, **dadurch gekennzeichnet, dass** die ebene metallische netzförmige Struktur (2) Maschen mit Werten der Nebendiagonale (DC) von ungefähr 5 mm aufweist.

15. Material nach irgendeinem der vorherigen Ansprüche, **dadurch gekennzeichnet, dass** das elastische Material (3) aus der Gruppe ausgewählt ist, welche aus Gummi, künstlichen und synthetischen Harzen und Linoleum besteht.

16. Material nach Anspruch 15, **dadurch gekennzeichnet, dass** das elastische Material (3) ein Material auf Gummibasis ist.

17. Material nach Anspruch 1, **dadurch gekennzeichnet, dass** die ausgleichende Schicht (5) mit sich verbunden eine äußere Schicht aus geotextilem Material und/oder aus einem Material in Form eines Filzes (6) hat.

## Revendications

1. Un matériau de revêtement de sol laminaire comprenant :
- une couche (3) de matériau résilient ; et
- une structure réticulaire métallique plane (2) couplée à ladite couche de matériau résilient (3) ; ladite structure réticulaire métallique (2) au moins partiellement émergeant à la surface supérieure exposée au fil de ladite couche de matériau résilient (3), dans laquelle ladite structure réticulaire métallique plane (2) est constituée d'un matériau métallique déformable, et
**caractérisé en ce que** le matériau comprend, du côté de ladite couche de matériau résilient (3) opposée à ladite structure réticulaire métallique plane (2), une couche d'équilibrage (5) en forme d'un réseau, où ladite couche d'équilibrage (5) consiste en fibres, telles que des fibres de verre.

2. Le matériau selon la revendication 1, **caractérisé en ce que** ladite structure réticulaire métallique (2) émerge complètement à la surface de ladite couche de matériau résilient (3).

3. Le matériau selon la revendication 1 ou la revendication 2, **caractérisé en ce qu'**il comprend un promoteur d'adhésion ou primaire (4) disposé entre ladite structure réticulaire métallique plane (2) et ladite couche de matériau résilient (3).

4. Le matériau selon l'une des revendications précédentes, **caractérisé en ce que** ladite structure réticulaire métallique (2) est une structure complètement plane.

5. Le matériau selon l'une des revendications précédentes, **caractérisé en ce que** ladite structure réticulaire métallique plane (2) est réalisée en aluminium.

6. Le matériau selon l'une des revendications précédentes, **caractérisé en ce que** ladite structure réticulaire métallique plane (2) présente une masse surfacique comprise entre 250 et 1250 g/m², approximativement.

7. Le matériau selon l'une des revendications précédentes, **caractérisé en ce que** ladite structure réticulaire métallique plane (2) présente une masse surfacique d'environ 750 g/m².

8. Le matériau selon l'une des revendications précédentes, **caractérisé en ce que** ladite structure réticulaire métallique plane (2) présente des mailles avec une forme hexagonale ou en losange aplati.

9. Le matériau selon l'une des revendications précédentes, **caractérisé en ce que** ladite structure réticulaire métallique plane (2) présente des mailles avec des valeurs de grande diagonale (DL) comprises entre 5 et 25 mm, approximativement.

10. Le matériau selon l'une des revendications précédentes, **caractérisé en ce que** ladite structure réticulaire métallique plane (2) présente des mailles avec des valeurs de grande diagonale (DL) comprises entre 10 et 15 mm, approximativement.

11. Le matériau selon l'une des revendications précédentes, **caractérisé en ce que** ladite structure réticulaire métallique plane (2) présente des mailles avec des valeurs de grande diagonale (DL) d'environ 10 mm.

12. Le matériau selon l'une des revendications précédentes, **caractérisé en ce que** ladite structure réticulaire métallique plane (2) présente des mailles avec des valeurs de petite diagonale (DC) comprises entre 3 et 13 mm approximativement.

13. Le matériau selon l'une des revendications précédentes, **caractérisé en ce que** ladite structure réticulaire métallique plane (2) présente des mailles avec des valeurs de petite diagonale (DC) comprises entre 5 et 6,5 mm approximativement.

14. Le matériau selon l'une des revendications précédentes, **caractérisé en ce que** ladite structure réticulaire métallique plane présente des mailles avec des valeurs de petite diagonale (DC) d'environ 5 mm.

15. Le matériau selon l'une des revendications précédentes, **caractérisé en ce** ledit matériau résilient (3) est choisi dans le groupe constitué des caoutchoucs, des résines artificielles et synthétiques et du linoléum.

16. Le matériau selon la revendication 15, **caractérisé en ce que** ledit matériau résilient (3) est un matériau à base de caoutchouc.

17. Le matériau selon la revendication 1, **caractérisé en ce que** ladite couche d'équilibrage (5) possède une couche extérieure de matériau géotextile et/ou d'un matériau en forme de feutre (6) qui lui est associée.
